# EUROPEAN PATENT APPLICATION

(11) **EP 4 092 577 A1**
(43) Date of publication of application: **23.11.2022**
(21) Application number: 22172719.1
(22) Date of filing: 11.05.2022
(51) Int. Cl.: G06N 3/00, G06N 3/04, G06N 3/08

(54) **REAL-TIME IN-VEHICLE MODELING AND SIMULATION UPDATES**

(30) Priority: 19.05.2021 US 202117324192
(71) Applicant: Volvo Car Corporation, 40531 Göteborg (SE)
(72) Inventor: GURUMURTHY, Krishnakumar, 40531 Göteborg (SE)
(74) Representative: Maiwald GmbH

(57) **Abstract**

Systems, devices, computer-implemented methods, and/or computer program products that facilitate modifying electronic control system behavior using distributed and/or federated machine intelligence. In one example, a system can comprise a process that executes computer executable components stored in memory. The computer executable components can comprise a model manager, a control component, and a learning component. The model manager can construct a trainable model using a pre-trained template model that is received via an in-vehicle network from a domain chief. The control component can dynamically vary a control parameter of a vehicle functional unit using the pre-trained template model to calibrate an output of the vehicle functional unit. The learning component can modify the trainable model based on observational data of the vehicle functional unit.

## Description

### FIELD

The subject disclosure relates to electronic control systems within a vehicle, and more specifically, to modifying electronic control system behavior using machine intelligence.

### BACKGROUND

A growing number of electronic control systems leverage increasingly complex software with expanding line counts to manage the various mechanical operations and user-facing features of a vehicle. Further complexity can be introduced by virtue of that software being distributed among a growing number of vehicle functional units (e.g., electronic control units) comprising such electronic control systems. Maintaining safe and effective vehicle operation can be challenging in view of such increasing complexity. Incremental software updates can be employed to maintain safe and effective vehicle operation. However, incremental software updates are generally incapable of effectively leveraging the vast amounts of data that vehicle functional units exchange between updates. For example, incremental software updates are generally unable to adapt in real-time to changing vehicle behavior that can be reflected in such data.

### SUMMARY

The following presents a summary to provide a basic understanding of one or more embodiments of the invention. This summary is not intended to identify key or critical elements or delineate any scope of the particular embodiments or any scope of the claims. Its sole purpose is to present concepts in a simplified form as a prelude to the more detailed description that is presented later. In one or more embodiments described herein, systems, devices, computer-implemented methods, and/or computer program products that facilitate modifying electronic control system behavior using distributed and/ or federated machine intelligence are described.

According to an embodiment, a system can comprise a process that executes computer executable components stored in memory. The computer executable components can comprise a model manager, a control component, and a learning component. The model manager can construct a trainable model using a pre-trained template model that is received via an in-vehicle network from a domain chief. The control component can dynamically vary a control parameter of a vehicle functional unit using the pre-trained template model to calibrate an output of the vehicle functional unit. The learning component can modify the trainable model based on observational data of the vehicle functional unit.

According to another embodiment, a computer-implemented method can comprise constructing, by a system operatively coupled to a processor, a trainable model using a pre-trained template model that is received via an in-vehicle network from a domain chief. The computer-implemented method can further comprise dynamically varying, by the system, a control parameter of a vehicle functional unit using the pre-trained template model to calibrate an output parameter of the vehicle functional unit. The computer-implemented method can further comprise modifying, by the system, the trainable model based on observational data of the vehicle functional unit.

According to an additional embodiment, a computer program product for modifying electronic control system behavior using distributed and/or federated machine intelligence can comprise a computer readable storage medium having program instructions embodied therewith. The program instructions are executable by a processor to cause the processor to perform operations. The operations can include constructing, by the processor, a trainable model using a pre-trained template model that is received via an in-vehicle network from a domain chief. The operations can further include dynamically varying, by the processor, a control parameter of a vehicle functional unit using the pre-trained template model to calibrate an output parameter of the vehicle functional unit. The operations can further include modifying, by the processor, the trainable model based on observational data of the vehicle functional unit.

### DESCRIPTION OF THE DRAWINGS

FIG. 1 illustrates a block diagram of an example, non-limiting system that can facilitate modifying electronic control system behavior using distributed and/or federated machine intelligence, in accordance with one or more embodiments described herein.
FIG. 2 illustrates a block diagram of an example, non-limiting in-vehicle network with distributed and/or federated machine intelligence, in accordance with one or more embodiments described herein.
FIG. 3 illustrates an example, non-limiting vehicle functional unit, in accordance with one or more embodiments described herein.
FIG. 4 illustrates an example, non-limiting sub-domain agent, in accordance with one or more embodiments described herein.
FIG. 5 illustrates an example, non-limiting distributed and/or federated machine intelligence framework for in-vehicle networks, in accordance with one or more embodiments described herein.
FIG. 6 illustrates an example, non-limiting in-vehicle network, in accordance with one or more embodiments described herein.
FIG. 7 illustrates another example, non-limiting in-vehicle network, in accordance with one or more embodiments described herein.
FIG. 8 illustrates an example, non-limiting centralized network environment for collaborative policy network updates, in accordance with one or more embodiments described herein.
FIG. 9 illustrates an example, non-limiting model catalog structure, in accordance with one or more embodiments described herein.
FIG. 10 illustrates a flow diagram of an example, non-limiting computer-implemented method that can facilitate modifying electronic control system behavior using distributed and/or federated machine intelligence, in accordance with one or more embodiments described herein.
FIG. 11 is a block diagram of a non-limiting example of an operating environment in which one or more embodiments described herein can be implemented.
FIG. 12 is a block diagram of a non-limiting example of a cloud computing environment in accordance with one or more embodiments described herein.
FIG. 13 is a block diagram of a non-limiting example of abstraction model layers in accordance with one or more embodiments described herein.

### DETAILED DESCRIPTION

The following detailed description is merely illustrative and is not intended to limit embodiments and/or application or uses of embodiments. Furthermore, there is no intention to be bound by any expressed or implied information presented in the preceding Background or Summary sections, or in the Detailed Description section.

One or more embodiments are now described with reference to the drawings, wherein like referenced numerals are used to refer to like elements throughout. In the following description, for purposes of explanation, numerous specific details are set forth in order to provide a more thorough understanding of the one or more embodiments. It is evident, however, in various cases, that the one or more embodiments can be practiced without these specific details.

It will be understood that when an element is referred to as being "coupled" to another element, it can describe one or more different types of coupling including, but not limited to, chemical coupling, communicative coupling, capacitive coupling, electrical coupling, electromagnetic coupling, inductive coupling, operative coupling, optical coupling, physical coupling, thermal coupling, and/or another type of coupling. As referenced herein, an "entity" can comprise a human, a client, a user, a computing device, a software application, an agent, a machine learning model, an artificial intelligence, and/or another entity. It should be appreciated that such an entity can facilitate implementation of the subject disclosure in accordance with one or more embodiments the described herein.

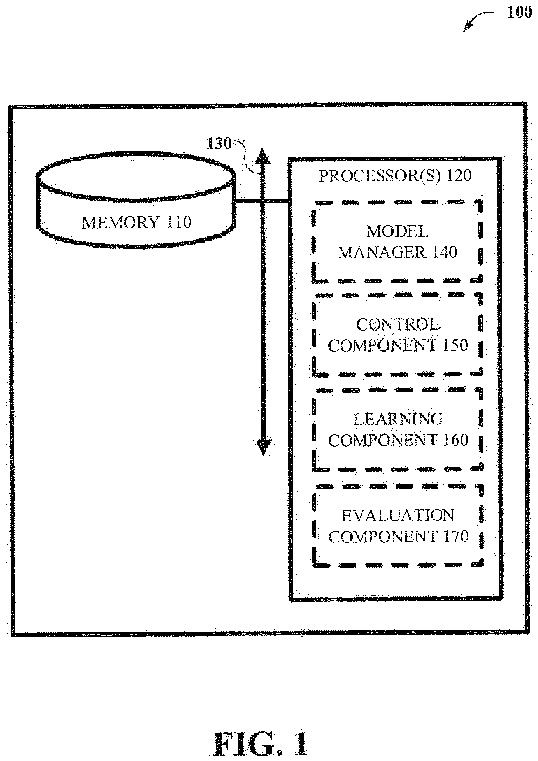

FIG. 1 illustrates a block diagram of an example, non-limiting system 100 that can facilitate modifying electronic control system behavior using distributed and/or federated machine intelligence, in accordance with one or more embodiments described herein. System 100 includes memory 110 for storing computer-executable components and one or more processors 120 operably coupled via one or more communication busses 130 to memory 110 for executing the computer-executable components stored in memory 110. As shown in FIG. 1, the computer-executable components can include a model manager 140, a control component 150, and a learning component 160.

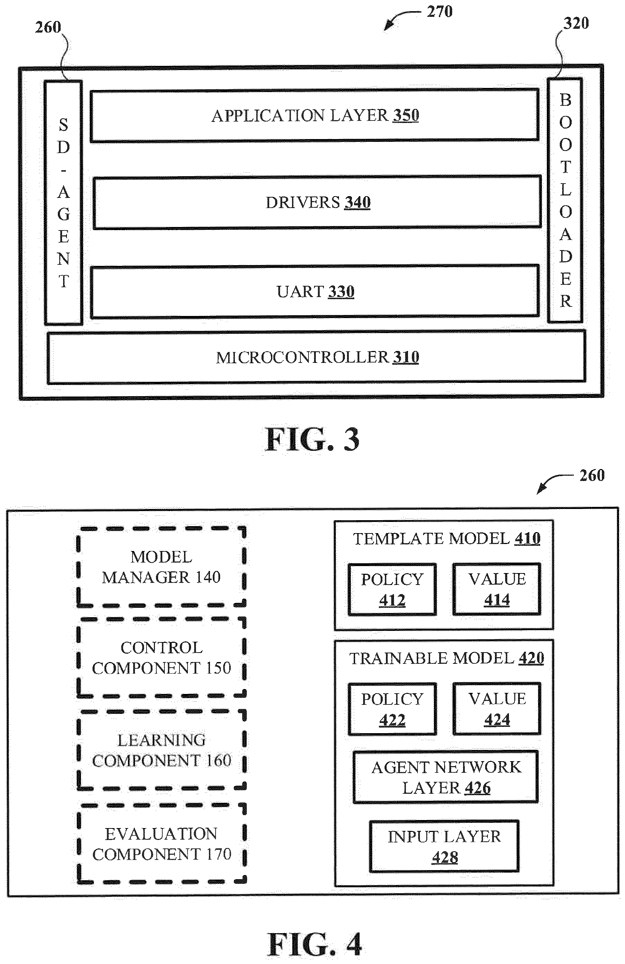

Model manager 140 can construct a trainable model using a pre-trained template model that is received via an in-vehicle network from a domain chief, as described in greater detail below with respect to FIG. 4. In an embodiment, model manager 140 can further replace the pre-trained template model with an updated pre-trained template model received via the in-vehicle network from the domain chief, as described in greater detail below with respect to FIG. 4. In an embodiment, the domain chief can receive the pre-trained template model via the in-vehicle network from a vehicle chief comprising a vehicle model that is modified based on gradient data and policy network snapshots generated by a plurality of domain chiefs that includes the domain chief.

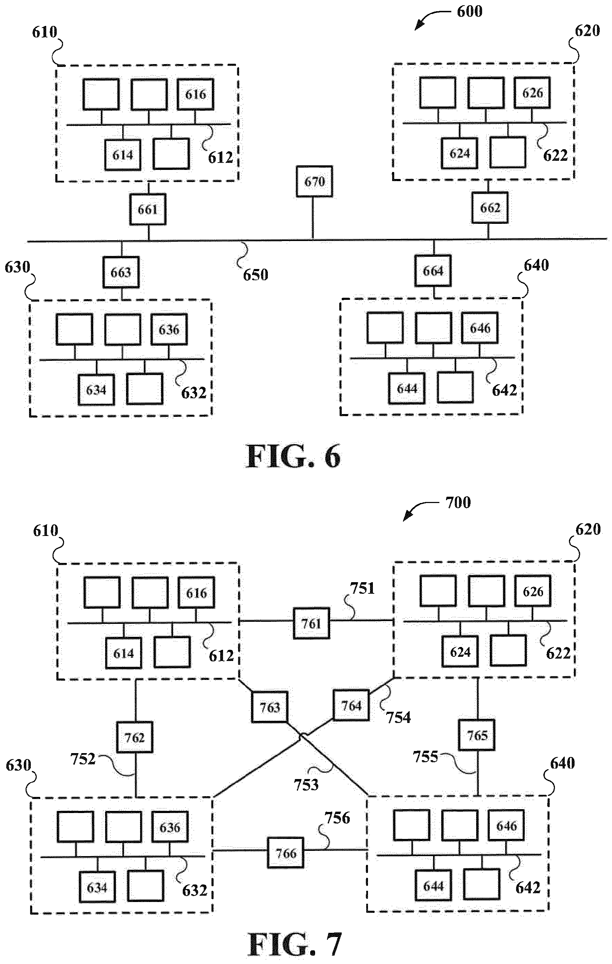

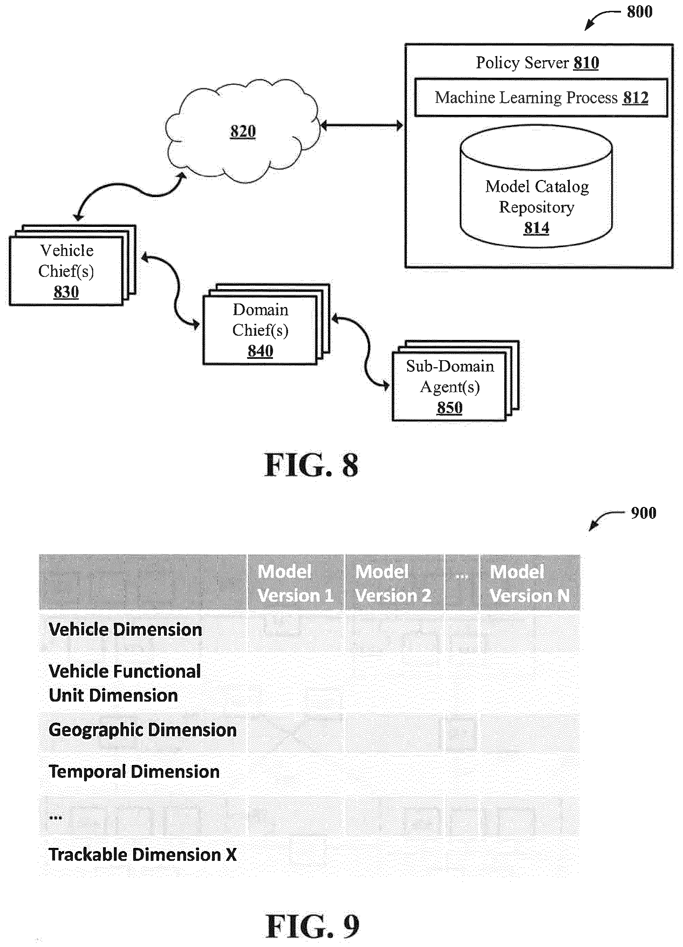

In an embodiment, the domain chief comprises a domain model that is modified based on gradient data and policy network snapshots generated by sub-domain agents operating in a domain within the in-vehicle network, as described in greater detail below with respect to FIG. 6. In an embodiment, the domain chief can comprise a multi-domain model that is modified based on gradient data and policy network snapshots generated by sub-domain agents operating in a plurality of domains within the in-vehicle network, as described in greater detail below with respect to FIG. 7. In an embodiment, the updated pre-trained template model is sent to the domain chief via an extravehicular network from a model catalog repository that stores template models trained using crowd-sourced policy network updates obtained from a plurality of vehicles, as described in greater detail below with respect to FIG. 8.

Control component 150 can dynamically vary a control parameter of a vehicle functional unit by calibrating an output of the vehicle functional unit using the pre-trained template model, as described in greater detail with reference to FIG. 4. Learning component 160 can modify the trainable model based on observational data of the vehicle functional unit, as described in greater detail with reference to FIG. 4. In an embodiment, the observational data can include input parameter data, output parameter data, internal state data, or a combination thereof. In an embodiment, learning component 160 can modify the trainable model using a reinforcement learning technique, as described in greater detail below with respect to FIG. 4.

In an embodiment, the computer-executable components stored in memory 110 further can include an evaluation component 170. Evaluation component 170 can generate gradient data by comparing respective policy and value networks of the pre-trained template model and the trainable model, as described in greater detail with reference to FIG. 4. The gradient data can correspond to experience gained by the learning component from modifying the trainable model. In an embodiment, evaluation component 170 can further communicate the gradient data and a snapshot of a policy network of the trainable model as input to a machine learning process of the domain chief. In this embodiment, the machine learning process can modify a domain model based on the input. In an embodiment, processor 120 can comprise a computing device executing in parallel with the vehicle functional unit, as described in greater detail below with respect to FIG. 3. The functionality of the computer-executable components utilized by the embodiments will be covered in greater detail below.

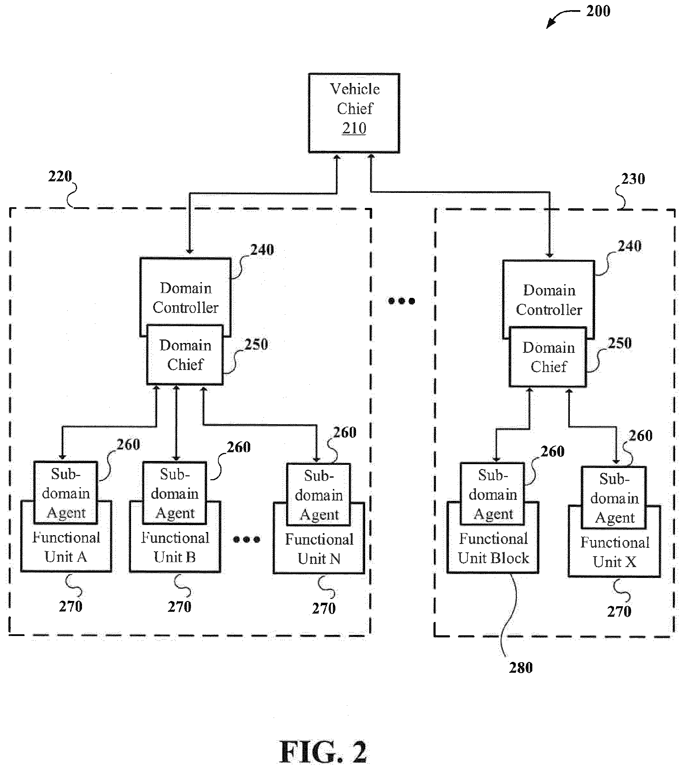

FIG. 2 illustrates a block diagram of an example, non-limiting in-vehicle network 200 with distributed and/or federated machine intelligence, in accordance with one or more embodiments described herein. As shown by FIG. 2, in-vehicle network 200 can include a plurality of vehicle functional units 270 (e.g., electronic control units and/or electronic control modules). In general, a vehicle functional unit 270 can be an embedded system within in-vehicle network 200 that can control one or more operational systems (or subsystems) within a vehicle. Examples of such operational systems (or subsystems) within a vehicle can include, but not be limited to, electrical systems, electronic systems, electromechanical systems, mechanical systems, mechatronics systems, or other operational systems related to operation of a vehicle. Example vehicle functional units 270 can include an engine control module (ECM), a powertrain control module (PCM), a transmission control module (TCM), a brake control module (BCM or EBCM), a central control module (CCM), a central timing module (CTM), a general electronic module (GEM), a body control module (BCM), a suspension control module (SCM), or other vehicle functional units that can control operational systems or subsystems within a vehicle.

A given vehicle functional unit 270 can be implemented as a computing device with an embedded microcontroller that can be programmed to perform a particular set of functions related to the one or more one or more operational systems that are controlled by the given vehicle functional unit 270. To that end, the given vehicle functional unit 270 can generate output parameter data that controls the one or more operational systems based on input parameter data that the given vehicle functional unit 270 monitors. By way of example, the given vehicle functional unit 270 can be a TCM that can control operation of a vehicle's transmission. In this example, the given vehicle functional unit 270 can monitor such input control parameters as throttle position, wheel speed, turbine speed, and/or vehicle speed generated by corresponding in-vehicle sensors. Based on such input control parameters, the given vehicle functional unit 270 can generate output parameter data that can control operation of the transmission.

FIG. 2 further shows that the plurality of vehicle functional units 270 comprising in-vehicle network 200 can be partitioned into multiple domains such that a domain controller 240 can centrally manage or coordinate operation of vehicle functional units 270 that perform related functions. For example, in-vehicle network 200 can include domain 220 and domain 230 that each include a domain controller 240 and one or more vehicle functional units 270. In this example, domain 220 can represent a powertrain/vehicle dynamics domain and domain 230 can represent a body control domain. The domain controller 240 of domain 220 can centrally manage or coordinate operation of vehicle functional units 270 that perform functions related to movement of the vehicle. By way of example, the one or more vehicle functional units 270 of domain 220 can include an ECM, a TCM, a BCM, a power steering module, and the like. The domain controller 240 of domain 230 can centrally manage or coordinate operation of vehicle functional units 270 that perform functions related to various electronic accessories within a body of the vehicle. By way of example, the one or more vehicle functional units 270 of domain 230 can control operation of such electronic accessories as window motors, mirror adjustment mechanisms, climate control, seat adjustment mechanisms, door locks, and other electronic accessories.

The distributed and/or federated machine intelligence of in-vehicle network 200 can comprise a vehicle chief 210, one or more domain chiefs 250, and/or one or more sub-domain agents 260. As described in greater detail below, the distributed and/or federated machine intelligence of in-vehicle network 200 can further comprise pre-trained template models that can calibrate vehicle behavior at various levels of hierarchy. For example, vehicle chief 210, the one or more domain chiefs 250, and/or the one or more sub-domain agents 260 can comprise pre-trained template models that can calibrate vehicle behavior at a vehicle-level, a domain-level, and a sub-domain-level, respectively. The distributed and/or federated machine intelligence of in-vehicle network 200 can also update such pre-trained template models using machine learning techniques based on observational data of the one or more vehicle functional units 270, as described in greater detail below. In an embodiment, the observational data can include input parameter data, output parameter data, internal state data, or a combination thereof. In an embodiment, in-vehicle network 200 can further include one or more functional unit blocks 280. In this embodiment, a functional unit block 280 can be a virtual object constructed to cluster vehicle functional units 270 that perform lower-level functions, such as vehicle functional units 270 that control operation of door locks, power windows, a sunroof, and/or other lower-level functionalities.

FIG. 3 illustrates an example, non-limiting vehicle functional unit 270, in accordance with one or more embodiments described herein. As shown by FIG. 3, vehicle functional unit 270 can comprise a microcontroller 310 that can be programmed to perform a particular set of functions related to one or more one or more operational systems that are controlled by vehicle functional unit 270. To that end, vehicle functional unit 270 can further comprise one or more software components executed by microcontroller 310 that can facilitate programming microcontroller 310 to perform the particular set of functions. The one or more software components can comprise bootloader 320, one or more drivers 340, and/or application layer 350. Bootloader 320 can be a software component stored in nonvolatile memory associated with microcontroller 310 that can facilitate initializing a runtime environment of microcontroller 310 during start-up. The one or more drivers 340 can be software components that can accept high-level commands from other software components (e.g., application layer 350) and translate the high-level commands to low-level commands for specific hardware devices (e.g., microcontroller 310 and/or universal asynchronous receiver-transmitter (UART) 330).

Application layer 350 can comprise a software component that can interact with a runtime environment of microcontroller 310 to implement the particular set of functions. To that end, application layer 350 can receive input parameter data (e.g., sensor data and/or user input data associated with the one or more operational systems) and/or internal state data regarding one or more operational systems associated with vehicle functional unit 270. Examples of input parameter data can include, but are not limited to sensor data (e.g., fuel level data, engine oil level data, tire pressure data, traction measurement data, acceleration data, wheel speed data, vehicle speed data, and/or other sensor data related to operation of a vehicle) and/or user input data (e.g., power window switch data, brake pedal data, gas pedal data, door lock switch data, and/or other user input data related to operation of a vehicle). In an embodiment, input parameter data can comprise categorical data, discrete data, continuous data, hierarchical data, or a combination thereof. Examples of internal state data can include, but are not limited to engine state data (e.g., fully operational, stall mode, and/or other engine state data), parking brake state data (e.g., parking brake engaged and/or parking brake disengaged), window state data (e.g., all windows closed, all windows open, and/or one or more windows open), and other internal state data related to operation of a vehicle.

Based on the input parameter data and/or internal state data, application layer 350 can generate output parameter data that controls operation of the one or more operational systems controlled by vehicle functional unit 270. In general, output parameter data can comprise control signals that can modify operation of an actuator mechanism, such as an electric motor or an electro-magnetic valve, by which vehicle functional unit 270 acts upon the environment (e.g., the one or more operational systems controlled by vehicle functional unit 270). In an embodiment, input parameter data can comprise categorical data, discrete data, continuous data, hierarchical data, or a combination thereof. By way of example, application layer 350 can comprise a function or other relationship, F(X), that can associate a set of inputs X (e.g., X → {x₁...xₙ}) with a set of outputs Y (e.g., Y → {y₁...yₙ}) such that Y = F(X). In this example, the set of outputs Y can comprise output parameter data and the set of inputs X can comprise input parameter data and/or internal state data.

In the embodiment depicted by FIG. 3, the one or more software components executed by microcontroller 310 of vehicle functional unit 270 include sub-domain agent 260. In an embodiment, sub-domain agent 260 can be implemented by a processor of a computing device executing in parallel with an electronic control unit (e.g., vehicle functional unit 270) that can be communicatively coupled to domain chief 250 via in-vehicle network 200. Continuing with the example above in which application layer 350 can comprise the function F(X), sub-domain agent 260 can interact with application layer 350 to calibrate the set of outputs Y using a set of control parameters C (e.g., C → {c₁...cₙ}) such that Y = F(X) can become Y = F(X,C). As discussed in greater detail below, sub-domain agent 260 can dynamically vary one or more control parameters comprising the set of control parameters C to calibrate output parameter data generated by vehicle functional unit 270. By calibrating output parameter data generated by vehicle functional unit 270, sub-domain agent 260 can modify operation of the one or more operational systems controlled by vehicle functional unit 270.

FIG. 4 illustrates an example, non-limiting sub-domain agent 260, in accordance with one or more embodiments described herein. As shown by FIG. 4, sub-domain agent 260 can comprise a pre-trained template model 410 received from a corresponding domain chief 250 via in-vehicle network 200. In an embodiment, pre-trained template model 410 can be sent to in-vehicle network 200 via an extravehicular network from a model catalog repository (e.g., model catalog repository 814 of FIG. 8) that stores template models trained using crowd-sourced policy network update data obtained from a plurality of vehicles. Pre-trained template model 410 can comprise a policy network 412 and a value network 414. In general, policy networks can be functions with a neural network architecture that can define a decision-making process of an agent (e.g., sub-domain agent 260). A policy network (e.g., policy network 412) can map perceived states of the agent's environment to actions to be taken by the agent when in those states. Moreover, value networks can be functions with a neural network architecture that can define an expected total reward for an agent starting from a given state. An agent can optimize a policy network by maximizing a value network (e.g., value network 414).

With respect to FIG. 4, model manager 140 of sub-domain agent 260 can construct trainable model 420 using the pre-trained template model 410. In an embodiment, model manager 140 can construct trainable model 420 by duplicating the pre-trained template model 410 such that policy network 412 and value network 414 can define initial states of policy network 422 and value network 424, respectively. Pre-trained template model 410 can serve as a reference model embedded with desired policy and/or value behavior at a sub-domain level. Control component 150 of sub-domain agent 260 can dynamically vary one or more control parameters of a particular vehicle functional unit 270 associated in sub-domain agent 260 using template model 410. To that end, control component 150 can evaluate observational data of the particular vehicle functional unit 270 with template model 410 and select one or more control parameters for the particular vehicle functional unit 470 based on that evaluation.

Trainable model 420 can be trained using observational data of the particular vehicle functional unit 470. To that end, learning component 160 of sub-domain agent 260 can modify trainable model 420 by directing that observational data to an input layer 428 of trainable model 420. Agent network layer 426 can be a machine learning process of trainable model 420 that can iteratively modify policy network 422 and/or value network 424 based on the observational data received by input layer 428. In an embodiment, the observational data of the particular vehicle functional unit 470 can comprise input parameter data, output parameter data, internal state data, and/or a combination thereof. In an embodiment, agent network layer 426 can comprise a reinforcement learning technique that modifies trainable model 420.

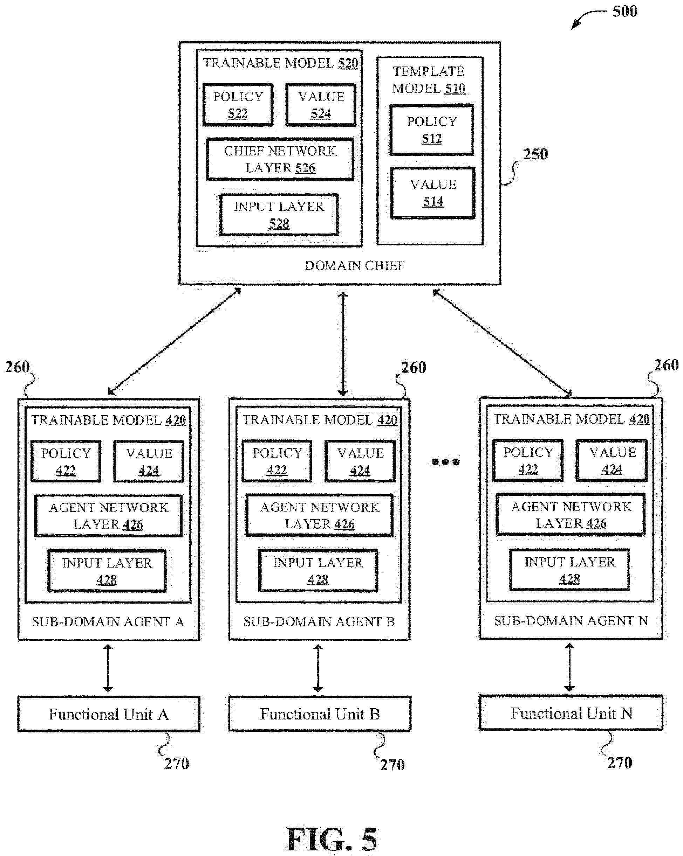

As learning component 160 modifies trainable model 420 using the observational data, the states of policy network 422 and value network 424 can deviate from the initial states defined by policy network 412 and value network 414, respectively. Evaluation component 170 of sub-domain agent 460 can generate gradient data by comparing the respective policy and value networks of pre-trained template model 410 and trainable model 420. The gradient data generated by evaluation component 170 can capture the deviation in the states of policy network 422 and value network 424 from the initial states defined by policy network 412 and value network 414, respectively. As such, the gradient data generated by evaluation component 170 can correspond to the experience that learning component 160 gains from modifying trainable model 420. Evaluation component 170 can communicate that gradient data and a snapshot of policy network 422 as input to a machine learning process of the corresponding domain chief 250, as shown by FIG. 5. In an embodiment, evaluation component 170 can further communicate policy metadata to the machine learning process of the corresponding domain chief 250 that can provide contextual information regarding the gradient data and/or the snapshot of policy network 422.

FIG. 5 illustrates an example, non-limiting distributed and/or federated machine learning framework 500 for in-vehicle networks, in accordance with one or more embodiments described herein. As shown by FIG. 5, framework 500 can include a domain chief 250 comprising a pre-trained template model 510 received from a vehicle chief 210 via in-vehicle network 200. In an embodiment, pre-trained template model 510 can be sent to in-vehicle network 200 via an extravehicular network from a model catalog repository (e.g., model catalog repository 814 of FIG. 8) that stores template models trained using crowd-sourced policy network update data obtained from a plurality of vehicles. Pre-trained template model 510 can be a domain-level model comprising a policy network 512 and a value network 514. Domain chief 250 can leverage to influence behavior of one or more vehicle functional units 470 via corresponding sub-domain agents 260.

Domain chief 250 can construct trainable model 520 using the pre-trained template model 510. In an embodiment, domain chief 250 can construct trainable model 520 by duplicating the pre-trained template model 510 such that policy network 512 and value network 514 can define initial states of policy network 522 and value network 524, respectively. Pre-trained template model 510 can serve as a reference model embedded with desired policy and/or value behavior at a domain-level. Trainable model 520 can be trained using gradient data and/or policy network snapshots (policy network update data) generated by sub-domain agents 260 operating within one or more domains of in-vehicle network 200. To that end, domain chief 250 can modify trainable model 520 by directing that policy network update data to an input layer 528 of trainable model 520. Chief network layer 526 can be a machine learning process of trainable model 520 that can iteratively modify policy network 522 and/or value network 524 based on the policy network update data received by input layer 528. In an embodiment, agent network layer 526 can comprise a reinforcement learning technique that modifies trainable model 520.

As domain chief 250 modifies trainable model 520 using the policy network update data, the states of policy network 522 and value network 524 can deviate from the initial states defined by policy network 512 and value network 514, respectively. In an embodiment, domain chief 250 can generate gradient data by comparing the respective policy and value networks of pre-trained template model 510 and trainable model 520. The gradient data generated by domain chief 250 can capture the deviation in the states of policy network 522 and value network 524 from the initial states defined by policy network 512 and value network 514, respectively. As such, the gradient data generated by domain chief 250 can correspond to the experience that domain chief 250 gains from modifying trainable model 520. In an embodiment, domain chief 250 can communicate that gradient data and a snapshot of policy network 522 as input to a machine learning process of the vehicle chief 210 for modifying a vehicle-level model. In an embodiment, domain chief 250 can further communicate policy metadata to the machine learning process of the vehicle chief 210 that can provide contextual information regarding the gradient data and/or the snapshot of policy network 522.

FIG. 6 illustrates an example, non-limiting in-vehicle network 600, in accordance with one or more embodiments described herein. In-vehicle network 600 can comprise multiple sub-domain agents that are partitioned into four domains that include domains 610, 620, 630, and 640. Of note, the number of domains was selected arbitrarily and only applies to this specific example. As shown by FIG. 6, a vehicle chief 670 can be communicatively coupled to the multiple sub-domain agents of in-vehicle network 600 via respective domain chiefs using a hierarchical, bus-based network topology. Each domain of in-vehicle network 600 can comprise a first level bus that can communicatively couple sub-domain agents of that domain with a corresponding domain chief. For example, domains 610, 620, 630, and 640 can include first level buses 612, 622, 632, and 642, respectively. In this example, first level bus 612 can communicatively couple domain chief 661 with the sub-domain agents (e.g., sub-domain agents 614 and/or 616) comprising domain 610; first level bus 622 can communicatively couple domain chief 662 with the sub-domain agents (e.g., sub-domain agents 624 and/or 626) comprising domain 620; first level bus 632 can communicatively couple domain chief 663 with the sub-domain agents (e.g., sub-domain agents 634 and/or 636) comprising domain 630; and first level bus 642 can communicatively couple domain chief 664 with the sub-domain agents (e.g., sub-domain agents 644 and/or 646) comprising domain 640. Each domain chief of in-vehicle network 600 can be communicatively coupled to a vehicle chief 670 with a second level bus 650.

The hierarchical, bus-based network topology can facilitate federated learning within in-vehicle network 600 by providing propagation paths for upward communication of gradient data and/or policy network snapshots. For example, an evaluation component of sub-domain agent 616 can communicate gradient data and/or policy network snapshots as input to an input layer of domain chief 661 via first level bus 612. In this example, a machine learning process of domain chief 661 can modify a domain-level model of domain chief 661 based on that input. As another example, the machine learning process of domain chief 661 can communicate gradient data and/or policy network snapshots as input to an input layer of vehicle chief 670 via second level bus 650. In this example, the machine learning process of vehicle chief 670 can modify a vehicle-level model of vehicle chief 670 based on that input.

The hierarchical, bus-based network topology can facilitate federated learning within in-vehicle network 600 by providing propagation paths for downward communication of updated template models and/or parameters (e.g., weights and/or biases of a deep neural network). For example, vehicle chief 670 can receive an updated vehicle-level template model via an extravehicular network from a model catalog repository (e.g., model catalog repository 810 of FIG. 8). In this example, vehicle chief 670 can partition an updated domain-level template model corresponding to domain chief 664 from the updated vehicle-level template model. Vehicle chief 670 can communicate that updated domain-level template model to domain chief 664 via second level bus 650. An existing domain-level template model of domain chief 664 can be replaced with the updated domain-level template model. As another example, domain chief 664 can partition an updated pre-trained template model corresponding to sub-domain agent 646 from the updated domain-level template model sent by vehicle chief 670. In this example, domain chief 664 can communicate that updated pre-trained template model to sub-domain agent 646 via first level bus 642. A model manager of sub-domain agent 646 can replace an existing pre-trained template model of sub-domain agent 646 with the updated pre-trained template model.

In an embodiment, one or more first level busses (e.g., first level bus 612, 622, 632, and/or 642) of in-vehicle network 600 can comprise a communication protocol, such as a Controller Area Network (CAN) communication protocol, Local Interconnect Network (LIN) communication protocol, Media Oriented Systems Transport (MOST) communication protocol, a wireless communication protocol (e.g., Bluetooth, ZigBee, Ultra Wide Band, and other wireless communication protocols), and/or other communication protocols. In an embodiment, one first level bus (e.g., first level bus 612) of in-vehicle network 600 can comprise a communication protocol that is distinct from a communication protocol of another first level bus (e.g., first level bus 632) of in-vehicle network 600. For example, first level bus 612 can comprise a CAN communication protocol and first level bus 622 can comprise a LIN communication protocol. In an embodiment, second level bus 650 of in-vehicle network 600 can comprise a communication protocol, such as an Ethernet communication protocol, a FlexRay communication protocol, and/or other communication protocols. In an embodiment, a first level bus (e.g., first level bus 612) can comprise a communication protocol that is distinct from a communication protocol of second level bus 650. For example, first level communication bus 622 can comprise a MOST communication protocol and second level bus 650 can comprise a FlexRay communication protocol.

FIG. 7 illustrates another example, non-limiting in-vehicle network 700, in accordance with one or more embodiments described herein. A comparison between FIGS. 6 and 7 illustrates that in some embodiments a network topology of an in-vehicle network can facilitate centrally orchestrating federated learning for domains of the in-vehicle network while in other embodiments the network topology of the in-vehicle network can facilitate collaborative interdomain federated learning for domains of the in-vehicle network. In particular, the hierarchical, bus-based network topology of in-vehicle network 600 can facilitate centrally orchestrating federated learning for domains of in-vehicle network 600 by communicating policy network update data (e.g., gradient data and/or policy network snapshots) from a given domain to a common domain chief for training a domain-level model. That is, a domain chief (e.g., domain chiefs 661, 662, 663, and/or 664) of in-vehicle network 600 can comprise a domain-level model that can be modified based on gradient data and/or policy network snapshots generated by sub-domain agents operating in a given domain of in-vehicle network 600. For example, domain chief 664 of in-vehicle network 600 can comprise a domain-level model that can be modified based on policy network update data generated by sub-domain agents (e.g., sub-domain agents 644 and/or 646) of domain 640. As used herein, a domain-level model modified based on policy network update data generated by sub-domain agents operating in a single domain (e.g., domain 640) can be referred to as a "domain model".

In contrast, a network topology of in-vehicle network 700 can facilitate collaborative interdomain federated learning for domains of in-vehicle network 700 by communicating policy network update data (e.g., gradient data and/or policy network snapshots) from multiple domains to a given domain chief via a communication bus that communicatively couples the multiple domains. That is, a domain chief (e.g., domain chiefs 761, 762, 763, 764, 765, and/or 766) of in-vehicle network 700 can comprise a domain-level model that can be modified based on gradient data and/or policy network snapshots generated by sub-domain agents operating in multiple domains within in-vehicle network 700. For example, a communication bus 751 can communicatively couple domains 610 and 620 of in-vehicle network 700. In this example, domain chief 761 can comprise a domain-level model that can be modified based on policy network update data generated by sub-domain agents (e.g., sub-domain agents 614, 616, 624, and/or 626) of domains 610 and 620. As used herein, a domain-level model modified based on policy network update data generated by sub-domain agents operating in multiple domains (e.g., domains 610 and 620) of an in-vehicle network can be referred to as a "multi-domain model". As another example with reference to FIG. 7, a communication bus 752 can communicatively couple domains 610 and 630; a communication bus 753 can communicatively couple domains 610 and 640; a communication bus 754 can communicatively couple domains 620 and 630; a communication bus 755 can communicatively couple domains 620 and 640; and a communication bus 756 can communicatively couple domains 630 and 640. In this example, corresponding domain-level models of domain chiefs 762-766 can be modified based on policy network update data received from sub-domain agents of domains that are communicatively coupled by communication busses 752-756, respectively.

In an embodiment, a dedicated communication bus (not shown) can communicatively couple a given domain chief of in-vehicle network 700 to a vehicle chief (not shown) of in-vehicle network 700. In an embodiment, the dedicated communication bus can provide a propagation path for upward communication of policy network update data from the given domain chief of in-vehicle network 700 to the vehicle chief. For example, a dedicated communication bus (not shown) can communicatively couple domain chief 763 to a vehicle chief (not shown) of in-vehicle network 700. In this example, the dedicated communication bus can provide a propagation path for upward communication of policy network update data from domain chief 763 to the vehicle chief of in-vehicle network 700. In an embodiment, the dedicated communication bus can provide a propagation path for downward communication of updated template models and/or parameters from the vehicle chief of in-vehicle network 700 to the given domain chief. Continuing with the example above in which the dedicated communication bus communicatively couples domain chief 763 to the vehicle chief, updated template models and/or parameters can be communicated via that dedicated communication bus from the vehicle chief to domain chief 763. The updated template models and/or parameters can correspond with a domain-level model of domain chief 763. The updated template models and/or parameters can correspond with a template model of a sub-domain agent operating in domain 610 or domain 640 of in-vehicle network 700.

FIG. 8 illustrates an example, non-limiting centralized network environment 800 for collaborative policy network updates, in accordance with one or more embodiments described herein. As shown by FIG. 8, centralized network environment 800 can comprise a policy server 810 that can be communicatively coupled to multiple vehicle chiefs 830 via network 820. Examples of networks that are suitable for implementing network 820 include, but not be limited to a local area network (LAN), a wide area network (WAN), a cellular network, the Internet, and other networks. Policy server 810 can comprise a machine learning process 812 and a model catalog repository 814. Machine learning process 812 can facilitate training or modifying one or more template models stored in model catalog repository 814 with crowd-sourced policy network update obtained from multiple vehicles.

By way of example, a vehicle in centralized network environment 800 can comprise an in-vehicle network. In this example, the in-vehicle network can comprise a given vehicle chief 830 communicatively coupled to one or more sub-domain agents 850 via one or more domain chiefs 840. A given sub-domain agent 850 can modify a trainable model based on local observational data of a corresponding vehicle functional unit, as discussed above. The given sub-domain agent 850 can communicate policy network update data (e.g., gradient data and/or policy network snapshots) as input to a machine learning process of a corresponding domain chief 840 of the in-vehicle network. The policy network update data can be associated with experience gained by the given sub-domain agent 850 from modifying the trainable model based on the local observational data.

The machine learning process of the corresponding domain chief 840 can modify a domain-level model based on policy network update data received as input from one or more sub-domain agents 850 communicatively coupled to the corresponding domain chief 840 within the in-vehicle network. In an embodiment, the domain-level model can be a domain model and the one or more sub-domain agents 850 can operate in a given domain of the in-vehicle network. In an embodiment, the domain-level model can be a multi-domain model and the one or more sub-domain agents 850 can operate in multiple domains of the in-vehicle network. The corresponding domain chief 840 can communicate policy network update data (e.g., gradient data and/or policy network snapshots) as input to a machine learning process of the given vehicle chief 830 of the in-vehicle network. The policy network update data can be associated with experience gained by the machine learning process of the corresponding domain chief 840 from modifying the domain-level model based on the policy network update data received from the one or more sub-domain agents 850.

The machine learning process of the given vehicle chief 830 can modify a vehicle-level model based on policy network update data received as input from one or more domain chiefs 840 communicatively coupled to the given vehicle chief 830 within the in-vehicle network. The given vehicle chief 830 can communicate policy network update data (e.g., gradient data and/or policy network snapshots) as input to machine learning process 812 of policy server 810 via network 820. The policy network update data can be associated with experience gained by the machine learning process of the given vehicle chief 830 from modifying the vehicle-level model based on the policy network update data received from the one or more domain chiefs 840. In an embodiment, local observational data used by the one or more sub-domain agents 850 within the in-vehicle network to modify corresponding trainable models can remain within the in-vehicle network. In an embodiment, the multiple vehicle chiefs 830 of centralized network environment 800 can refrain from communicating local observational data to policy server 810.

Machine learning process 812 of policy server 810 can train or modify template models stored in model catalog repository 814 based on policy network update data received as input from one or more vehicle chiefs 830 via network 820. Such template models can include vehicle-level models, domain-level models, and/or sub-domain-level models. In an embodiment, the policy network update data received from the one or more vehicle chiefs 830 can comprise policy metadata that can provide contextual information regarding the policy network update data. For example, such policy network update data can comprise policy metadata that can identify a particular type of vehicle, vehicle domain, and/or vehicle functional unit that generated the policy network update data or a subset thereof. As another example, such policy network update data can comprise policy metadata that can identify a particular geographical context (e.g., location data) and/or temporal context (e.g., season, time of day, and the like) in which the policy network update data was generated.

In an embodiment, policy metadata can facilitate managing template models stored in model catalog repository 814 using a model catalog structure that can facilitate deploying the template models in a context specific manner. By way of example, model catalog structure 900 of FIG. 9 can facilitate deploying template models in a context specific manner. To that end, model catalog structure 900 can store template models in association with particular trackable dimensions. As shown by FIG. 9, such trackable dimensions can include vehicle and vehicle functional unit dimensions that can correspond to particular types of vehicle and vehicle functional units, respectively. Such trackable dimensions can further include geographic and temporal dimensions that can correspond to particular geographical and temporal contexts, respectively. Policy server 810 can utilize such trackable dimensions to deploy updated template models to a given vehicle chief 830 that are appropriate to a context of the given vehicle chief 830. For example, the given vehicle chief 830 can operate within an in-vehicle network of a particular vehicle type including one or more particular domains comprising a set of particular vehicle functional units. In this example, policy server 810 can deploy updated template models to the given vehicle chief 830 that are associated with the particular vehicle type, the one or more particular domains, and/or the set of particular vehicle functional units.

FIG. 9 further shows that model catalog structure 900 can also store template models in association with particular model versions. Policy server 810 can utilize such model versioning data to determine whether to deploy updated template models to the given vehicle chief 830. For example, policy server 810 can query the given vehicle chief 830 for versioning information regarding a vehicle-level model, one or more domain-level models, and/or one or more sub-domain-level models currently in use within the in-vehicle network. In this example, policy server 810 can compare the versioning information received from the given vehicle chief 830 with model versioning data of model catalog structure 900. If that comparison indicates one or more template models currently in use within the in-vehicle network are outdated, policy server 810 can deploy updated template models to the given vehicle chief 830.

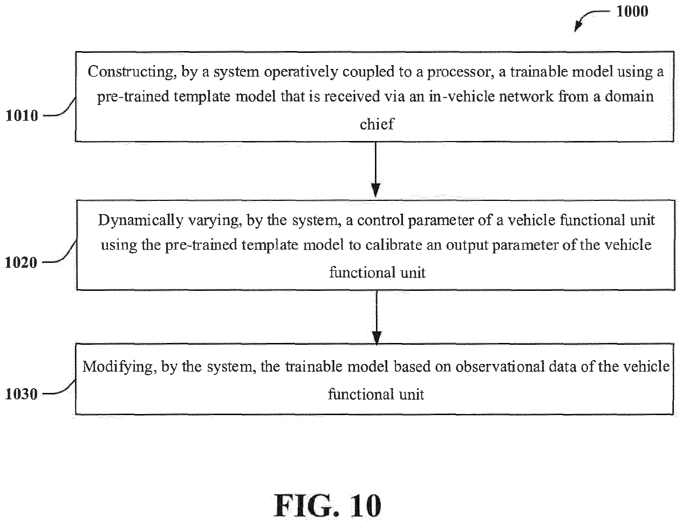

FIG. 10 illustrates a flow diagram of an example, non-limiting computer-implemented method 1000 that can facilitate modifying electronic control system behavior using distributed and/or federated machine intelligence, in accordance with one or more embodiments described herein. Repetitive description of like elements employed in other embodiments described herein is omitted for sake of brevity. At 1010, the computer-implemented method 1000 can comprise constructing, by a system operatively coupled to a processor (e.g., using model manager 140), a trainable model using a pre-trained template model that is received via an in-vehicle network from a domain chief. At 1020, the computer-implemented method 1000 can comprise dynamically varying, by the system (e.g., using control component 150), a control parameter of a vehicle functional unit using the pre-trained template model to calibrate an output parameter of the vehicle functional unit. At 1030, the computer-implemented method 1000 can comprise modifying, by the system (e.g., using learning component 160), the trainable model based on observational data of the vehicle functional unit.

In an embodiment, the computer-implemented method 1000 can further comprise generating, by the system (e.g., using evaluation component 170), gradient data by comparing respective policy and value networks of the pre-trained template model and the trainable model. In an embodiment, the computer-implemented method 1000 can further comprise communicating, by the system (e.g., using evaluation component 170), the gradient data and a snapshot of a policy network of the trainable model as input to a machine learning process of the domain chief. In an embodiment, the machine learning process can modify a domain model based on the input. In an embodiment, the domain chief can comprise a domain model that is modified based on gradient data and policy network snapshots generated by sub-domain agents operating in a domain within the in-vehicle network. In an embodiment, the domain chief can comprise a multi-domain model that is modified based on gradient data and policy network snapshots generated by sub-domain agents operating in a plurality of domains within the in-vehicle network.

In an embodiment, the computer-implemented method 1000 can further comprise replacing, by the system (e.g., using model manager 140), the pre-trained template model with an updated pre-trained template model received via the in-vehicle network from the domain chief. In an embodiment, the updated pre-trained template model can be sent to the domain chief via an extravehicular network from a model catalog repository that stores template models trained using crowd-sourced policy network update data obtained from a plurality of vehicles. In an embodiment, the computer-implemented method 1000 can further comprise constructing, by the system (e.g., using model manager 140), a new trainable model with the updated pre-trained template. In an embodiment, the computer-implemented method 1000 can further comprise modifying, by the system (e.g., using learning component 160), the new trainable model based on the observational data of the vehicle functional unit.

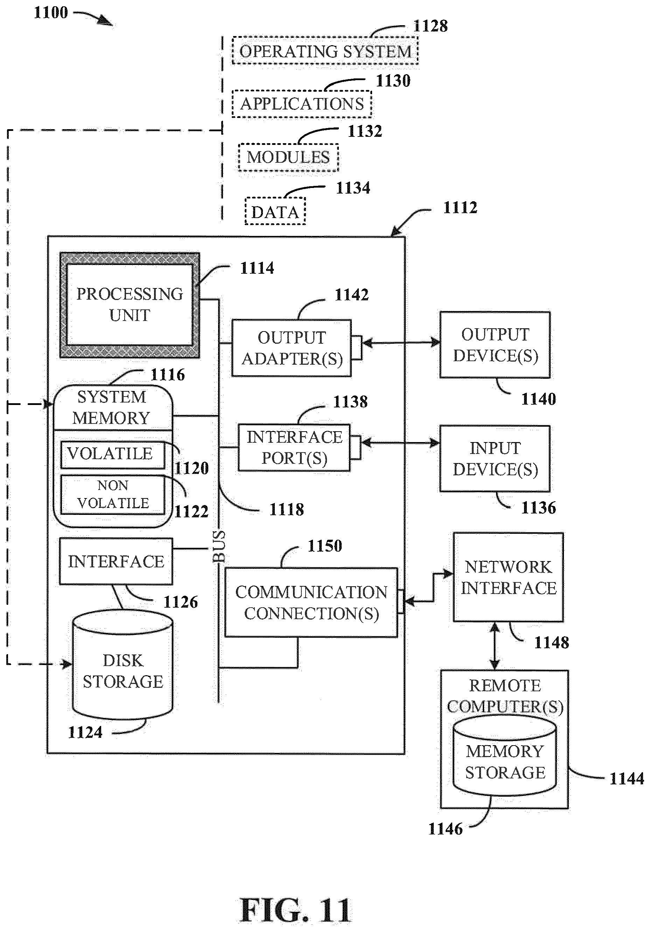

In order to provide a context for the various aspects of the disclosed subject matter, FIG. 11 as well as the following discussion are intended to provide a general description of a suitable environment in which the various aspects of the disclosed subject matter can be implemented. FIG. 11 illustrates a suitable operating environment 1100 for implementing various aspects of this disclosure can also include a computer 1112. The computer 1112 can also include a processing unit 1114, a system memory 1116, and a system bus 1118. The system bus 1118 couples system components including, but not limited to, the system memory 1116 to the processing unit 1114. The processing unit 1114 can be any of various available processors. Dual microprocessors and other multiprocessor architectures also can be employed as the processing unit 1114. The system bus 1118 can be any of several types of bus structure(s) including the memory bus or memory controller, a peripheral bus or external bus, and/or a local bus using any variety of available bus architectures including, but not limited to, Industrial Standard Architecture (ISA), Micro-Channel Architecture (MSA), Extended ISA (EISA), Intelligent Drive Electronics (IDE), VESA Local Bus (VLB), Peripheral Component Interconnect (PCI), Card Bus, Universal Serial Bus (USB), Advanced Graphics Port (AGP), Firewire (IEEE 1094), and Small Computer Systems Interface (SCSI). The system memory 1116 can also include volatile memory 1120 and nonvolatile memory 1122. The basic input/output system (BIOS), containing the basic routines to transfer information between elements within the computer 1112, such as during start-up, is stored in nonvolatile memory 1122. By way of illustration, and not limitation, nonvolatile memory 1122 can include read only memory (ROM), programmable ROM (PROM), electrically programmable ROM (EPROM), electrically erasable programmable ROM (EEPROM), flash memory, or nonvolatile random-access memory (RAM) (e.g., ferroelectric RAM (FeRAM). Volatile memory 1120 can also include random access memory (RAM), which acts as external cache memory. By way of illustration and not limitation, RAM is available in many forms such as static RAM (SRAM), dynamic RAM (DRAM), synchronous DRAM (SDRAM), double data rate SDRAM (DDR SDRAM), enhanced SDRAM (ESDRAM), Synchlink DRAM (SLDRAM), direct Rambus RAM (DRRAM), direct Rambus dynamic RAM (DRDRAM), and Rambus dynamic RAM

Computer 1112 can also include removable/non-removable, volatile/non-volatile computer storage media. FIG. 11 illustrates, for example, a disk storage 1124. Disk storage 1124 can also include, but is not limited to, devices like a magnetic disk drive, floppy disk drive, tape drive, Jaz drive, Zip drive, LS-100 drive, flash memory card, or memory stick. The disk storage 1124 also can include storage media separately or in combination with other storage media including, but not limited to, an optical disk drive such as a compact disk ROM device (CD-ROM), CD recordable drive (CD-R Drive), CD rewritable drive (CD-RW Drive) or a digital versatile disk ROM drive (DVD-ROM). To facilitate connection of the disk storage 1124 to the system bus 1118, a removable or non-removable interface is typically used, such as interface 1126. FIG. 11 also depicts software that acts as an intermediary between users and the basic computer resources described in the suitable operating environment 1100. Such software can also include, for example, an operating system 1128. Operating system 1128, which can be stored on disk storage 1124, acts to control and allocate resources of the computer 1112. System applications 1130 take advantage of the management of resources by operating system 1128 through program modules 1132 and program data 1134, e.g., stored either in system memory 1116 or on disk storage 1124. It is to be appreciated that this disclosure can be implemented with various operating systems or combinations of operating systems. A user enters commands or information into the computer 1112 through input device(s) 1136. Input devices 1136 include, but are not limited to, a pointing device such as a mouse, trackball, stylus, touch pad, keyboard, microphone, joystick, game pad, satellite dish, scanner, TV tuner card, digital camera, digital video camera, web camera, and the like. These and other input devices connect to the processing unit 1114 through the system bus 1118 via interface port(s) 1138. Interface port(s) 1138 include, for example, a serial port, a parallel port, a game port, and a universal serial bus (USB). Output device(s) 1140 use some of the same type of ports as input device(s) 1136. Thus, for example, a USB port can be used to provide input to computer 1112, and to output information from computer 1112 to an output device 1140. Output adapter 1142 is provided to illustrate that there are some output devices 1140 like monitors, speakers, and printers, among other output devices 1140, which require special adapters. The output adapters 1142 include, by way of illustration and not limitation, video and sound cards that provide a means of connection between the output device 1140 and the system bus 1118. It can be noted that other devices and/or systems of devices provide both input and output capabilities such as remote computer(s) 1144.

Computer 1112 can operate in a networked environment using logical connections to one or more remote computers, such as remote computer(s) 1144. The remote computer(s) 1144 can be a computer, a server, a router, a network PC, a workstation, a microprocessor-based appliance, a peer device or other common network node and the like, and typically can also include many or the elements described relative to computer 1112. For purposes of brevity, only a memory storage device 1146 is illustrated with remote computer(s) 1144. Remote computer(s) 1144 is logically connected to computer 1112 through a network interface 1148 and then physically connected via communication connection 1150. Network interface 1148 encompasses wire and/or wireless communication networks such as local-area networks (LAN), wide-area networks (WAN), cellular networks, etc. LAN technologies include Fiber Distributed Data Interface (FDDI), Copper Distributed Data Interface (CDDI), Ethernet, Token Ring and the like. WAN technologies include, but are not limited to, point-to-point links, circuit switching networks like Integrated Services Digital Networks (ISDN) and variations thereon, packet switching networks, and Digital Subscriber Lines (DSL). Communication connection(s) 1150 refers to the hardware/software employed to connect the network interface 1148 to the system bus 1118. While communication connection 1150 is shown for illustrative clarity inside computer 1112, it can also be external to computer 1112. The hardware/software for connection to the network interface 1148 can also include, for exemplary purposes only, internal and external technologies such as, modems including regular telephone grade modems, cable modems and DSL modems, ISDN adapters, and Ethernet cards.

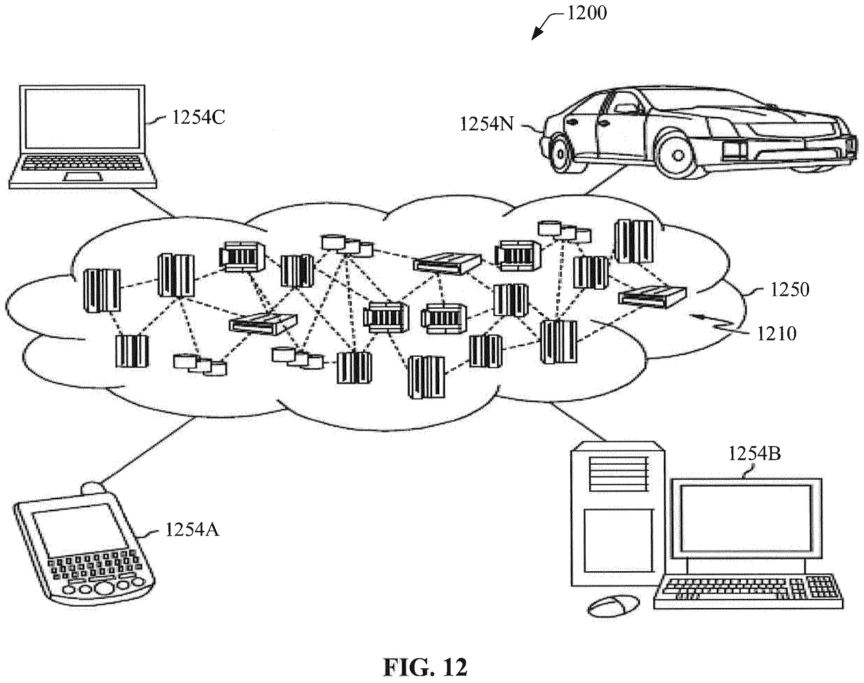

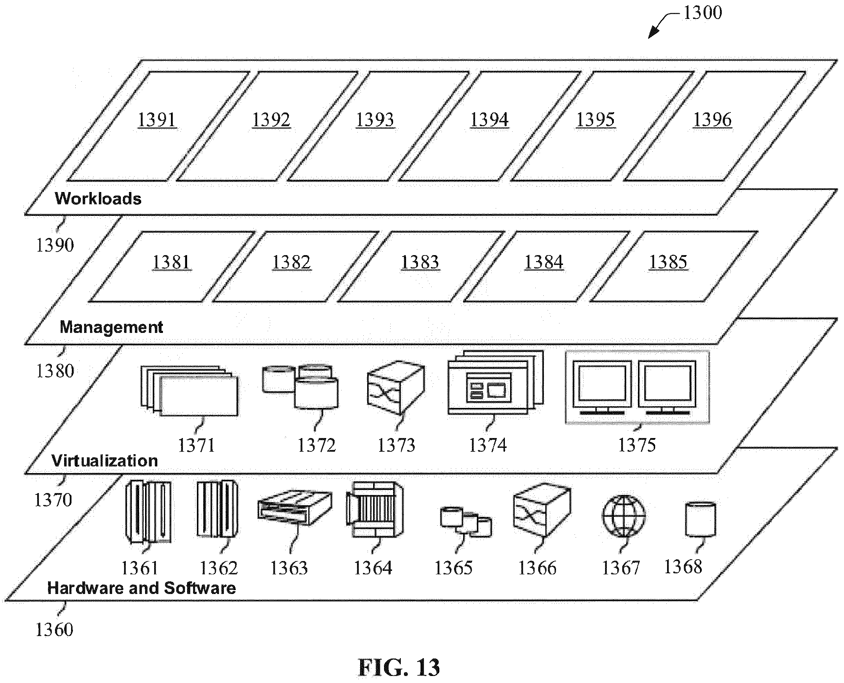

In some cases, the various embodiments of system 100 described herein can be associated with a cloud computing environment. For example, the system 100 can be associated with cloud computing environment 1250 as is illustrated in FIG. 12 and/or one or more functional abstraction layers described herein with reference to FIG. 13 (e.g., hardware and software layer 1060, virtualization layer 1370, management layer 1380, and/or workloads layer 1390).

It is to be understood that although this disclosure includes a detailed description on cloud computing, implementation of the teachings recited herein are not limited to a cloud computing environment. Rather, embodiments of the present invention are capable of being implemented in conjunction with any other type of computing environment now known or later developed.

Cloud computing is a model of service delivery for enabling convenient, on-demand network access to a shared pool of configurable computing resources (e.g., networks, network bandwidth, servers, processing, memory, storage, applications, virtual machines, and services) that can be rapidly provisioned and released with minimal management effort or interaction with a provider of the service. This cloud model may include at least five characteristics, at least three service models, and at least four deployment models.

### Characteristics are as follows:

On-demand self-service: a cloud consumer can unilaterally provision computing capabilities, such as server time and network storage, as needed automatically without requiring human interaction with the service's provider.

Broad network access: capabilities are available over a network and accessed through standard mechanisms that promote use by heterogeneous thin or thick client platforms (e.g., mobile phones, laptops, and PDAs).

Resource pooling: the provider's computing resources are pooled to serve multiple consumers using a multi-tenant model, with different physical and virtual resources dynamically assigned and reassigned according to demand. There is a sense of location independence in that the consumer generally has no control or knowledge over the exact location of the provided resources but may be able to specify location at a higher level of abstraction (e.g., country, state, or datacenter).

Rapid elasticity: capabilities can be rapidly and elastically provisioned, in some cases automatically, to quickly scale out and rapidly released to quickly scale in. To the consumer, the capabilities available for provisioning often appear to be unlimited and can be purchased in any quantity at any time.

Measured service: cloud systems automatically control and optimize resource use by leveraging a metering capability at some level of abstraction appropriate to the type of service (e.g., storage, processing, bandwidth, and active user accounts). Resource usage can be monitored, controlled, and reported, providing transparency for both the provider and consumer of the utilized service.

### Service Models are as follows:

Software as a Service (SaaS): the capability provided to the consumer is to use the provider's applications running on a cloud infrastructure. The applications are accessible from various client devices through a thin client interface such as a web browser (e.g., web-based e-mail). The consumer does not manage or control the underlying cloud infrastructure including network, servers, operating systems, storage, or even individual application capabilities, with the possible exception of limited user-specific application configuration settings.

Platform as a Service (PaaS): the capability provided to the consumer is to deploy onto the cloud infrastructure consumer-created or acquired applications created using programming languages and tools supported by the provider. The consumer does not manage or control the underlying cloud infrastructure including networks, servers, operating systems, or storage, but has control over the deployed applications and possibly application hosting environment configurations.

Infrastructure as a Service (IaaS): the capability provided to the consumer is to provision processing, storage, networks, and other fundamental computing resources where the consumer is able to deploy and run arbitrary software, which can include operating systems and applications. The consumer does not manage or control the underlying cloud infrastructure but has control over operating systems, storage, deployed applications, and possibly limited control of select networking components (e.g., host firewalls).

### Deployment Models are as follows:

Private cloud: the cloud infrastructure is operated solely for an organization. It may be managed by the organization or a third party and may exist on-premises or off-premises.

Community cloud: the cloud infrastructure is shared by several organizations and supports a specific community that has shared concerns (e.g., mission, security requirements, policy, and compliance considerations). It may be managed by the organizations or a third party and may exist on-premises or off-premises.

Public cloud: the cloud infrastructure is made available to the general public or a large industry group and is owned by an organization selling cloud services.

Hybrid cloud: the cloud infrastructure is a composition of two or more clouds (private, community, or public) that remain unique entities but are bound together by standardized or proprietary technology that enables data and application portability (e.g., cloud bursting for load-balancing between clouds).

A cloud computing environment is service oriented with a focus on statelessness, low coupling, modularity, and semantic interoperability. At the heart of cloud computing is an infrastructure that includes a network of interconnected nodes.

Referring now to FIG. 12 an illustrative cloud computing environment 1250 is depicted. As shown, cloud computing environment 1250 includes one or more cloud computing nodes 1210 with which local computing devices used by cloud consumers, such as, for example, personal digital assistant (PDA) or cellular telephone 1254A, desktop computer 1254B, laptop computer 1254C, and/or automobile computer system 1254N may communicate. Although not illustrated in FIG. 12, cloud computing nodes 1210 can further comprise a quantum platform (e.g., quantum computer, quantum hardware, quantum software, and/or another quantum platform) with which local computing devices used by cloud consumers can communicate. Nodes 1210 may communicate with one another. They may be grouped (not shown) physically or virtually, in one or more networks, such as Private, Community, Public, or Hybrid clouds as described hereinabove, or a combination thereof. This allows cloud computing environment 1250 to offer infrastructure, platforms and/or software as services for which a cloud consumer does not need to maintain resources on a local computing device. It is understood that the types of computing devices 1254A-N shown in FIG. 12 are intended to be illustrative only and that computing nodes 1210 and cloud computing environment 1250 can communicate with any type of computerized device over any type of network and/or network addressable connection (e.g., using a web browser).

Referring now to FIG. 13, a set of functional abstraction layers provided by cloud computing environment 1250 (FIG. 12) is shown. It should be understood in advance that the components, layers, and functions shown in FIG. 13 are intended to be illustrative only and embodiments of the invention are not limited thereto. As depicted, the following layers and corresponding functions are provided:

Hardware and software layer 1360 include hardware and software components. Examples of hardware components include: mainframes 1361; RISC (Reduced Instruction Set Computer) architecture based servers 1362; servers 1363; blade servers 1364; storage devices 1365; and networks and networking components 1366. In some embodiments, software components include network application server software 1367, database software 1368, quantum platform routing software (not illustrated in FIG. 13), and/or quantum software (not illustrated in FIG. 13).

Virtualization layer 1370 provides an abstraction layer from which the following examples of virtual entities may be provided: virtual servers 1371; virtual storage 1372; virtual networks 1373, including virtual private networks; virtual applications and operating systems 1374; and virtual clients 1375.

In one example, management layer 1380 may provide the functions described below. Resource provisioning 1381 provides dynamic procurement of computing resources and other resources that are utilized to perform tasks within the cloud computing environment. Metering and pricing 1382 provide cost tracking as resources are utilized within the cloud computing environment, and billing or invoicing for consumption of these resources. In one example, these resources may include application software licenses. Security provides identity verification for cloud consumers and tasks, as well as protection for data and other resources. User portal 1383 provides access to the cloud computing environment for consumers and system administrators. Service level management 1384 provides cloud computing resource allocation and management such that required service levels are met. Service Level Agreement (SLA) planning and fulfillment 1385 provide pre-arrangement for, and procurement of, cloud computing resources for which a future requirement is anticipated in accordance with an SLA.

Workloads layer 1390 provides examples of functionality for which the cloud computing environment may be utilized. Non-limiting examples of workloads and functions which may be provided from this layer include: mapping and navigation 1391; software development and lifecycle management 1392; virtual classroom education delivery 1393; data analytics processing 1394; transaction processing 1395; and vulnerability risk assessment software 1396.

The present invention may be a system, a method, an apparatus and/or a computer program product at any possible technical detail level of integration. The computer program product can include a computer readable storage medium (or media) having computer readable program instructions thereon for causing a processor to carry out aspects of the present invention. The computer readable storage medium can be a tangible device that can retain and store instructions for use by an instruction execution device. The computer readable storage medium can be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium can also include the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network and/or a wireless network. The network can comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device. Computer readable program instructions for carrying out operations of the present invention can be assembler instructions, instruction-set-architecture (ISA) instructions, machine instructions, machine dependent instructions, microcode, firmware instructions, state-setting data, configuration data for integrated circuitry, or either source code or object code written in any combination of one or more programming languages, including an object oriented programming language such as Smalltalk, C++, or the like, and procedural programming languages, such as the "C" programming language or similar programming languages. The computer readable program instructions can execute entirely on the user's computer, partly on the user's computer, as a stand-alone software package, partly on the user's computer and partly on a remote computer or entirely on the remote computer or server. In the latter scenario, the remote computer can be connected to the user's computer through any type of network, including a local area network (LAN) or a wide area network (WAN), or the connection can be made to an external computer (for example, through the Internet using an Internet Service Provider). In some embodiments, electronic circuitry including, for example, programmable logic circuitry, field-programmable gate arrays (FPGA), or programmable logic arrays (PLA) can execute the computer readable program instructions by utilizing state information of the computer readable program instructions to personalize the electronic circuitry, in order to perform aspects of the present invention.

Aspects of the present invention are described herein with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer readable program instructions. These computer readable program instructions can be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions can also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks. The computer readable program instructions can also be loaded onto a computer, other programmable data processing apparatus, or other device to cause a series of operational acts to be performed on the computer, other programmable apparatus or other device to produce a computer implemented process, such that the instructions which execute on the computer, other programmable apparatus, or other device implement the functions/acts specified in the flowchart and/or block diagram block or blocks.

The flowchart and block diagrams in the Figures illustrate the architecture, functionality, and operation of possible implementations of systems, methods, and computer program products according to various embodiments of the present invention. In this regard, each block in the flowchart or block diagrams can represent a module, segment, or portion of instructions, which comprises one or more executable instructions for implementing the specified logical function(s). In some alternative implementations, the functions noted in the blocks can occur out of the order noted in the Figures. For example, two blocks shown in succession can, in fact, be executed substantially concurrently, or the blocks can sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

While the subject matter has been described above in the general context of computer-executable instructions of a computer program product that runs on a computer and/or computers, those skilled in the art will recognize that this disclosure also can or can be implemented in combination with other program modules. Generally, program modules include routines, programs, components, data structures, etc. that perform particular tasks and/or implement particular abstract data types. Moreover, those skilled in the art will appreciate that the inventive computer-implemented methods can be practiced with other computer system configurations, including single-processor or multiprocessor computer systems, mini-computing devices, mainframe computers, as well as computers, hand-held computing devices (e.g., PDA, phone), microprocessor-based or programmable consumer or industrial electronics, and the like. The illustrated aspects can also be practiced in distributed computing environments in which tasks are performed by remote processing devices that are linked through a communications network. However, some, if not all aspects of this disclosure can be practiced on stand-alone computers. In a distributed computing environment, program modules can be located in both local and remote memory storage devices. For example, in one or more embodiments, computer executable components can be executed from memory that can include or be comprised of one or more distributed memory units. As used herein, the term "memory" and "memory unit" are interchangeable. Further, one or more embodiments described herein can execute code of the computer executable components in a distributed manner, e.g., multiple processors combining or working cooperatively to execute code from one or more distributed memory units. As used herein, the term "memory" can encompass a single memory or memory unit at one location or multiple memories or memory units at one or more locations.

As used in this application, the terms "component," "system," "platform," "interface," and the like, can refer to and/or can include a computer-related entity or an entity related to an operational machine with one or more specific functionalities. The entities disclosed herein can be either hardware, a combination of hardware and software, software, or software in execution. For example, a component can be, but is not limited to being, a process running on a processor, a processor, an object, an executable, a thread of execution, a program, and/or a computer. By way of illustration, both an application running on a server and the server can be a component. One or more components can reside within a process and/or thread of execution and a component can be localized on one computer and/or distributed between two or more computers. In another example, respective components can execute from various computer readable media having various data structures stored thereon. The components can communicate via local and/or remote processes such as in accordance with a signal having one or more data packets (e.g., data from one component interacting with another component in a local system, distributed system, and/or across a network such as the Internet with other systems via the signal). As another example, a component can be an apparatus with specific functionality provided by mechanical parts operated by electric or electronic circuitry, which is operated by a software or firmware application executed by a processor. In such a case, the processor can be internal or external to the apparatus and can execute at least a part of the software or firmware application. As yet another example, a component can be an apparatus that provides specific functionality through electronic components without mechanical parts, wherein the electronic components can include a processor or other means to execute software or firmware that confers at least in part the functionality of the electronic components. In an aspect, a component can emulate an electronic component via a virtual machine, e.g., within a cloud computing system.

In addition, the term "or" is intended to mean an inclusive "or" rather than an exclusive "or." That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. Moreover, articles "a" and "an" as used in the subject specification and annexed drawings should generally be construed to mean "one or more" unless specified otherwise or clear from context to be directed to a singular form. As used herein, the terms "example" and/or "exemplary" are utilized to mean serving as an example, instance, or illustration. For the avoidance of doubt, the subject matter disclosed herein is not limited by such examples. In addition, any aspect or design described herein as an "example" and/or "exemplary" is not necessarily to be construed as preferred or advantageous over other aspects or designs, nor is it meant to preclude equivalent exemplary structures and techniques known to those of ordinary skill in the art.

As it is employed in the subject specification, the term "processor" can refer to substantially any computing processing unit or device comprising, but not limited to, single-core processors; single-processors with software multithread execution capability; multi-core processors; multi-core processors with software multithread execution capability; multi-core processors with hardware multithread technology; parallel platforms; and parallel platforms with distributed shared memory. Additionally, a processor can refer to an integrated circuit, an application specific integrated circuit (ASIC), a digital signal processor (DSP), a graphics processing unit (GPU), a field programmable gate array (FPGA), a programmable logic controller (PLC), a complex programmable logic device (CPLD), a discrete gate or transistor logic, discrete hardware components, or any combination thereof designed to perform the functions described herein. Further, processors can exploit nano-scale architectures such as, but not limited to, molecular and quantum-dot based transistors, switches and gates, in order to optimize space usage or enhance performance of user equipment. A processor can also be implemented as a combination of computing processing units. In this disclosure, terms such as "store," "storage," "data store," data storage," "database," and substantially any other information storage component relevant to operation and functionality of a component are utilized to refer to "memory components," entities embodied in a "memory," or components comprising a memory. It is to be appreciated that memory and/or memory components described herein can be either volatile memory or nonvolatile memory, or can include both volatile and nonvolatile memory. By way of illustration, and not limitation, nonvolatile memory can include read only memory (ROM), programmable ROM (PROM), electrically programmable ROM (EPROM), electrically erasable ROM (EEPROM), flash memory, or nonvolatile random access memory (RAM) (e.g., ferroelectric RAM (FeRAM). Volatile memory can include RAM, which can act as external cache memory, for example. By way of illustration and not limitation, RAM is available in many forms such as synchronous RAM (SRAM), dynamic RAM (DRAM), synchronous DRAM (SDRAM), double data rate SDRAM (DDR SDRAM), enhanced SDRAM (ESDRAM), Synchlink DRAM (SLDRAM), direct Rambus RAM (DRRAM), direct Rambus dynamic RAM (DRDRAM), and Rambus dynamic RAM (RDRAM). Additionally, the disclosed memory components of systems or computer-implemented methods herein are intended to include, without being limited to including, these and any other suitable types of memory.

What has been described above include mere examples of systems and computer-implemented methods. It is, of course, not possible to describe every conceivable combination of components or computer-implemented methods for purposes of describing this disclosure, but one of ordinary skill in the art can recognize that many further combinations and permutations of this disclosure are possible. Furthermore, to the extent that the terms "includes," "has," "possesses," and the like are used in the detailed description, claims, appendices and drawings such terms are intended to be inclusive in a manner similar to the term "comprising" as "comprising" is interpreted when employed as a transitional word in a claim.

The descriptions of the various embodiments have been presented for purposes of illustration, but are not intended to be exhaustive or limited to the embodiments disclosed. Many modifications and variations will be apparent to those of ordinary skill in the art without departing from the scope and spirit of the described embodiments. The terminology used herein was chosen to best explain the principles of the embodiments, the practical application or technical improvement over technologies found in the marketplace, or to enable others of ordinary skill in the art to understand the embodiments disclosed herein. Further aspects of the invention are provided by the subject matter of the following clauses:
1. A system, comprising:
   a processor that executes the following computer-executable components stored in memory:
   a model manager that constructs a trainable model using a pre-trained template model that is received via an in-vehicle network from a domain chief;
   a control component that dynamically varies a control parameter of a vehicle functional unit using the pre-trained template model to calibrate an output of the vehicle functional unit; and
   a learning component that modifies the trainable model based on observational data of the vehicle functional unit.
2. The system of claim 1, wherein the observational data includes input parameter data, output parameter data, internal state data, or a combination thereof.
3. The system of clause 1, further comprising:
   an evaluation component that generates gradient data by comparing respective policy and value networks of the pre-trained template model and the trainable model, wherein the gradient data corresponds to experience gained by the learning component from modifying the trainable model.
4. The system of clause 3, wherein the evaluation component communicates the gradient data and a snapshot of a policy network of the trainable model as input to a machine learning process of the domain chief that modifies a domain model based on the input.
5. The system of clause 1, wherein the processor comprises a computing device executing in parallel with an electronic control unit that is communicatively coupled to the domain chief via the in-vehicle network.
6. The system of clause 1, wherein the model manager replaces the pre-trained template model with an updated pre-trained template model received via the in-vehicle network from the domain chief.
7. The system of clause 6, wherein the updated pre-trained template model is sent to the domain chief via an extravehicular network from a model catalog repository that stores template models trained using crowd-sourced policy network update data obtained from a plurality of vehicles.
8. The system of clause 1, wherein the domain chief comprises a multi-domain model that is modified based on gradient data and policy network snapshots generated by sub-domain agents operating in a plurality of domains within the in-vehicle network.
9. The system of clause 1, wherein the domain chief receives the pre-trained template model via the in-vehicle network from a vehicle chief that comprises a vehicle model that is modified based on gradient data and policy network snapshots generated by a plurality of domain chiefs that includes the domain chief.
10. The system of clause 1, wherein the learning component modifies the trainable model using a reinforcement learning technique.
11. A computer-implemented method, comprising:
   constructing, by a system operatively coupled to a processor, a trainable model using a pre-trained template model that is received via an in-vehicle network from a domain chief;
   dynamically varying, by the system, a control parameter of a vehicle functional unit using the pre-trained template model to calibrate an output parameter of the vehicle functional unit; and
   modifying, by the system, the trainable model based on observational data of the vehicle functional unit.
12. The computer-implemented method of clause 11, further comprising:
   generating, by the system, gradient data by comparing respective policy and value networks of the pre-trained template model and the trainable model, wherein the gradient data corresponds to experience gained by the system from modifying the trainable model.
13. The computer-implemented method of clause 12, further comprising:
   communicating, by the system, the gradient data and a snapshot of a policy network of the trainable model as input to a machine learning process of the domain chief that modifies a domain model based on the input.
14. The computer-implemented method of clause 11, further comprising:
   replacing, by the system, the pre-trained template model with an updated pre-trained template model received via the in-vehicle network from the domain chief, wherein the updated pre-trained template model is sent to the domain chief via an extravehicular network from a model catalog repository that stores template models trained using crowd-sourced policy network update data obtained from a plurality of vehicles.
15. The computer-implemented method of clause 14, further comprising:
   constructing, by the system, a new trainable model with the updated pre-trained template; and
   modifying, by the system, the new trainable model based on the observational data of the vehicle functional unit.
16. The computer-implemented method of clause 11, wherein the domain chief comprises a multi-domain model that is modified based on gradient data and policy network snapshots generated by sub-domain agents operating in a plurality of domains within the in-vehicle network.
17. The computer-implemented method of clause 11, wherein the domain chief comprises a domain model that is modified based on gradient data and policy network snapshots generated by sub-domain agents operating in a domain within the in-vehicle network.
18. A computer program product comprising a computer readable storage medium having program instructions embodied therewith, the program instructions executable by a processor to cause the processor to:
   construct, by the processor, a trainable model using a pre-trained template model that is received via an in-vehicle network from a domain chief;
   dynamically vary, by the processor, a control parameter of a vehicle functional unit using the pre-trained template model to calibrate an output parameter of the vehicle functional unit; and
   modify, by the processor, the trainable model based on observational data of the vehicle functional unit.
19. The computer program product of clause 18, the program instructions executable by the processor to further cause the processor to:
   generate, by the processor, gradient data by comparing respective policy and value networks of the pre-trained template model and the trainable model, wherein the gradient data corresponds to experience gained from modifying the trainable model.
20. The computer program product of clause 18, the program instructions executable by the processor to further cause the processor to:
   communicate, by the processor, the gradient data and a snapshot of a policy network of the trainable model as input to a machine learning process of the domain chief that modifies a domain model based on the input.

## Claims

1. A system, comprising:
a processor that executes the following computer-executable components stored in memory:
a model manager that constructs a trainable model using a pre-trained template model that is received via an in-vehicle network from a domain chief;
a control component that dynamically varies a control parameter of a vehicle functional unit using the pre-trained template model to calibrate an output of the vehicle functional unit; and
a learning component that modifies the trainable model based on observational data of the vehicle functional unit.

2. The system according to claim 1, wherein the observational data includes input parameter data, output parameter data, internal state data, or a combination thereof.

3. The system according to any of the preceding claims, further comprising:
an evaluation component that generates gradient data by comparing respective policy and value networks of the pre-trained template model and the trainable model, wherein the gradient data corresponds to experience gained by the learning component from modifying the trainable model.

4. The system of claim 3, wherein the evaluation component communicates the gradient data and a snapshot of a policy network of the trainable model as input to a machine learning process of the domain chief that modifies a domain model based on the input.

5. The system according to any of the preceding claims, wherein the processor comprises a computing device executing in parallel with an electronic control unit that is communicatively coupled to the domain chief via the in-vehicle network.

6. The system according to any of the preceding claims, wherein the model manager replaces the pre-trained template model with an updated pre-trained template model received via the in-vehicle network from the domain chief.

7. The system according to any of the preceding claims, wherein the updated pre-trained template model is sent to the domain chief via an extravehicular network from a model catalog repository that stores template models trained using crowd-sourced policy network update data obtained from a plurality of vehicles.

8. The system according to any of the preceding claims, wherein the domain chief comprises a multi-domain model that is modified based on gradient data and policy network snapshots generated by sub-domain agents operating in a plurality of domains within the in-vehicle network.

9. The system according to any of the preceding claims, wherein the domain chief receives the pre-trained template model via the in-vehicle network from a vehicle chief that comprises a vehicle model that is modified based on gradient data and policy network snapshots generated by a plurality of domain chiefs that includes the domain chief.

10. The system , wherein according to any of the preceding claims the learning component modifies the trainable model using a reinforcement learning technique.

11. A method, comprising:
constructing, by a system operatively coupled to a processor, a trainable model using a pre-trained template model that is received via an in-vehicle network from a domain chief;
dynamically varying, by the system, a control parameter of a vehicle functional unit using the pre-trained template model to calibrate an output parameter of the vehicle functional unit; and
modifying, by the system, the trainable model based on observational data of the vehicle functional unit.

12. The method according to any of the preceding claims, further comprising:
generating, by the system, gradient data by comparing respective policy and value networks of the pre-trained template model and the trainable model, wherein the gradient data corresponds to experience gained by the system from modifying the trainable model.

13. The method of claim 12, further comprising:
communicating, by the system, the gradient data and a snapshot of a policy network of the trainable model as input to a machine learning process of the domain chief that modifies a domain model based on the input.

14. The method according to any of the preceding claims, further comprising:
replacing, by the system, the pre-trained template model with an updated pre-trained template model received via the in-vehicle network from the domain chief, wherein the updated pre-trained template model is sent to the domain chief via an extravehicular network from a model catalog repository that stores template models trained using crowd-sourced policy network update data obtained from a plurality of vehicles.

15. The method according to any of the preceding claims, further comprising:
constructing, by the system, a new trainable model with the updated pre-trained template; and
modifying, by the system, the new trainable model based on the observational data of the vehicle functional unit.
